# EUROPEAN PATENT SPECIFICATION

(11) **EP 2 106 098 B1**
(45) Date of publication and mention of the grant of the patent: **17.06.2015**
(21) Application number: 08400013.2
(22) Date of filing: 28.03.2008
(51) Int. Cl.: H04L 29/08

(54) **Remote backup of data stored in mobile communication device**
Fernsicherung von auf einem mobilen Kommunikationsgerät gespeicherten Daten
Sauvegarde distante de données stockées dans un dispositif de communications mobiles

(43) Date of publication of application: 30.09.2009
(73) Proprietor: Vodafone Holding GmbH, 40213 Düsseldorf (DE)
(72) Inventor: Koraichi, Najib, 6333 CT Schimmert (NL); Montaner, Javier, 50008 Zaragoza (ES); Waters, Patrick H., SP5 2HN Redlynch Salisbury (GB)
(74) Representative: Jostarndt, Hans-Dieter

(56) References cited:
- EP-A- 1 796 406
- US-A1- 2006 212 482
- US-A1- 2007 105 532

## Description

### Field of the invention

The invention relates to an adapter module for use in a mobile communication device, which is connected to a network server via a communication network. The invention further relates to a mobile communication device for backing up first data stored therein in a network server connected to the mobile communication device via a communication network. Moreover, the invention relates to a method for backing up first data stored in a mobile communication device in a remote server connected to the mobile communication device via a communication network.

### Background of the invention

Users of mobile communication devices, such as, for example, cellular phones or personal data assistants (PDAs) often store important personal data in their mobile communication device. The data may comprise contact information, which may be stored using an address book application of the mobile communication device, important messages that have been received in the mobile communication device or personal notes that have been generated using appropriate applications of the mobile communication device.

Mobile communication devices that are used in cellular communication networks usually comprise a mobile terminal and a subscriber identification module inserted into the mobile terminal, which is configured as a smart card comprising a microprocessor and a memory. The subscriber identification module particularly contains data identifying the user, which is used when connecting the mobile communication device to a cellular mobile network. Moreover, the subscriber identification module may store the above-mentioned personal data of the user. In addition or as an alternative, the personal data of the user may also be stored in a memory of the mobile terminal.

When losing the subscriber identification module or the mobile terminal storing his personal data, the user often also loses his personal data. Restoring the data is very time-consuming or may not be possible at all.

In order to prevent the personal data from being lost in the event of losing the subscriber identification module or the mobile terminal, it is advantageous for the user to backup the data in a database outside the mobile communication device. From the database, the personal data of the user may be restored to a mobile terminal or to a subscriber identity module, if required. For example, such a backup allows the user to the restore his personal data in a new mobile terminal or in a new subscriber identity module after having lost or replaced his mobile terminal or subscriber identity module the data initially were stored in.

US patent application US 2007/0105532 A1 describes a pre-saving of personal data for a subscriber to a telecommunication network. The data memorized in a mobile communication station is saved in a server connected to the wireless communication network by means of one of several saving modes. The backup is carried out using an application included in a subscriber identity module card of the mobile communication station.

US patent application US 2006/0212482 A1 describes a system for exchanging and managing information including a mobile device configured to automatically insert, exchange and update a caller's contact information into a user's phonebook. The phonebook can reside on either a UICC card, SIM, USIM, Mega SIM, or any other smart card or an integrated chip, on the mobile device or on a remote server. The automatic insert and/or automatic exchange mechanism is triggered when a call is made between two people on mobile phones or other devices.

The known backup method has the disadvantage, that a subscriber identity module comprising a special back up application is needed for backing up personal data stored in the mobile communications device in a network server.

### Summary of the Invention

Therefore, it is an object of the present invention to allow for backing up data stored in a mobile communication device in a network server independent of a special configuration of the subscriber identification module and/or the mobile terminal.

This object is achieved by an adapter module according to claim 1, by a mobile communication device according to claim 15 and by a method according to claim 16. Embodiments of the adapter module, the mobile communication device and the method are given in the dependent claims.

According to one aspect of the invention, an adapter module for use in a mobile communication device is provided. The mobile communication device is connected to a network server via a communication network. The adapter module is connectable to the mobile communication device. The adapter module comprises a backup component, which is configured to access first data stored in the mobile communication device and to form a first data message from the first data, and the adapter module comprises a transmission component, which is configured to instruct the mobile communication device to send the first data message to the network server via the communication network. The mobile communication device comprises a mobile terminal and a subscriber identification module and the adapter module is connected between the mobile terminal and the subscriber identification module to provide a backup functionality independent of the functions of the mobile terminal and the subscriber identification module included in the mobile communication device.

According to a second aspect of the invention, a mobile communication device for backing up first data stored therein in a network server is provided. The network server is connected to the mobile communication device via a communication network. An adapter module is connected to the mobile terminal, wherein the adapter module comprises a backup component, which is configured to access the first data stored in the mobile communication device and to form a first data message from the first data, and wherein the adapter module comprises a transmission component, which is configured to instruct the mobile communication device to send the first data message to the network server via the communication network.

According to a third aspect of the invention, a method for backing up first data stored in a mobile communication device in a remote server is provided. The remote server is connected to the mobile communication device via a communication network. The method comprises connecting an adapter module to the mobile communication device. The adapter module accesses the first data and forms a first data message from the first data and the adapter module instructs the mobile communication device to send the first data message to the network server via the communication network.

The invention involves the idea to provide functionality for transmitting data stored in the mobile communication device to a network server by means of an adapter module, which is being connected to mobile communication device. The use of the adapter module makes it possible to provide a backup functionality independent of the functions of the mobile terminal and the subscriber identification module included in the mobile communication device.

In this embodiment, the adapter module is able to use the interface of the mobile terminal for connecting the subscriber identification module to interact with the mobile terminal. Likewise, the adapter module is able to use the interface of the subscriber identification module for connecting the mobile terminal to interact with the subscriber identification module. Thus, the adapter module can be connected to existing interfaces of the mobile terminal and the subscriber identification module. Therefore, no special interfaces for connecting the adapter module to the mobile terminal and/or to the subscriber identification module are necessary and the adapter module can be used in any mobile communication device. The subscriber identification module may be configured as a subscriber identity module according the GSM specification or as universal subscriber identity module according to UMTS specification.

Moreover, in one embodiment of the adapter module, the mobile communication device and the method, the backup component is configured to use SIM application toolkit (SAT) commands or USIM application toolkit (USAT) commands for accessing the first data.

In a further embodiment of the adapter module, the mobile communication device and the method, the transmission component is configured to use SIM application toolkit (SAT) commands or USIM application toolkit (USAT) commands to instruct the mobile communication device to send the first data message to the network server.

The SAT as specified in the GSM specifications standard or the USAT as specified in the UMTS specifications allows the subscriber identification module of a mobile communication device to access functions of the mobile terminal. By implementing the SAT or USAT in the adapter module, the components of the adapter module are able to access the functions of the mobile terminal in the same way as the subscriber identification module.

In one embodiment of the adapter module, the mobile communication device and the method, the adapter module comprises a restoring component which is configured to receive a second data message sent from the network server to the mobile communication device and which is configured to the store second data included in the second data message in the mobile communication device.

Advantageously, the restoring component allows for restoring data, which have been backed in the network server, in the mobile communication device.

In a related embodiment of the adapter module, the mobile communication device and the method, the transmission component is configured to use SIM application toolkit (SAT) commands or USIM application toolkit (USAT) commands to store the second data in the mobile communication device.

In one embodiment of the adapter module, the mobile communication device and the method, the adapter module comprises a memory unit storing an address identifier for addressing the first data message to the network server.

It is an advantage of this embodiment that the adapter is capable of storing an address identifier, which is needed for sending the first data message to the network server. The address identifier may be, for example, a network address of the network server in case the data message is sent to the server via a data connection based on the Internet protocol, or a mobile subscriber integrated services digital network number (MSISDN) assigned to network server in case the data message is transmitted to the network server via a circuit switched data connection, particularly via a short message, for example.

The data, which are backed up in the remote server are usually sensitive data not intended for use by third parties. Therefore, in one embodiment of the adapter module, the mobile communication device and the method, the backup component is configured to encrypt at least a part of the first data message in such a way that it can be decrypted in the network server.

Advantageously, in this embodiment, the data are sent to the remote server in the secure manner. The encryption prevents third parties to access the first data during the transmission of the data to the network server. Preferably, the encryption is made using an encryption key, which is shared between the adapter module and the network server.

In a further embodiment of the adapter module, the mobile communication device and the method, the backup component is configured to add first authentication information to the first data message, which allow for an authentication of the first data message in the network server.

It is an advantage of this embodiment that the network server is able to verify that the first message originates from the adapter module. The first authentication information may comprise information that is encrypted by the backup component using an encryption key assigned to the adapter module, which is shared between the adapter module and the network server.

In one embodiment of the adapter module, the mobile communication device and the method, at least part of the second data message is encrypted and the restoring component is configured to decrypt the second data message.

Advantageously, the encryption of the data transmitted from the network server to the mobile communication device prevents the data from being accessed by unauthorized third parties during the transmission from the network server to the mobile communication device.

In a further embodiment of the adapter module, the mobile communication device and the method, the restoring component is configured to authenticate the second data message by verifying a second authentication information included in the second data message.

By authenticating the second message, the restoring component ensures that the message has been sent by the network server. The second authentication information may comprise information that is encrypted by the network server using an encryption key assigned to the network server, which is shared between the adapter module and the network server.

In one embodiment of the adapter module, the mobile communication device and the method, the adapter module comprises a security component which is configured to request a user password from the mobile communication device and to verify the user password.

In a related embodiment of the adapter module, the mobile communication device and the method, the security component is configured to lock the backup component and/or the restoring component unless the user password has been verified successfully.

The verification of the user password advantageously prevents third parties from using the adapter module, particularly from retrieving data of the user from the remote server by means of the adapter module. The user password is preferably stored in a secure area of the adapter module, so that it is prevented from being read by third parties.

In one embodiment of the adapter module, the mobile communication device and the method, the first and second data are personal data of a user of the mobile communication device, particularly address book data and/or messages received in the mobile communication device.

Moreover, in one embodiment of the adapter module, the mobile communication device and the method, the communication network is cellular mobile network.

The data may be stored in the mobile terminal or in the subscriber identification module of the mobile communication device.

The aforementioned and other aspects of the invention will also be apparent from and elucidated with reference to the embodiments of the invention described hereinafter making reference to the drawings.

### Brief description of the drawings

Reference will be made by way of example to the accompanying drawings in which
- Fig. 1: is a schematic depiction of a mobile communication device and remote database for backing up data of the mobile communication device,
- Fig. 2: is a schematic block diagram of the mobile communication device and the adapter module in one embodiment of the invention, and
- Fig. 3: is a schematic block diagram of components of the adapter module, which provide the backup functionality of the adapter module.

### Detailed description of embodiments of the invention

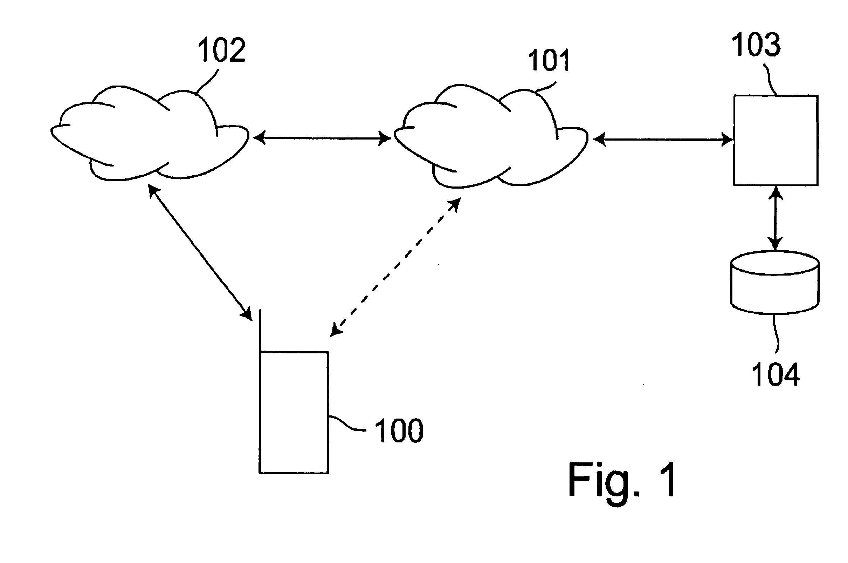

Figure 1 shows a mobile communication device 100, such as, for example, a cellular phone, a PDA or the like, which can communicate with network server 103, which is connected to a data network 101. The network server 103 provides functionality for backing up personal data stored in the mobile communication device 100. For this purpose, the network server 103 contains or is connected to a database 104, which is configured to store data that is transferred from the mobile communication device 100 to the network server 103.

In one embodiment, the mobile communication device 100 communicates with the network server 103 via a cellular mobile network 102, which is connected to the data network 101. The cellular mobile network 102 may be configured according to the GSM standard (GSM: Global System for Mobile Communication) or to the UMTS standard (UMTS: Universal Mobile Telecommunications System), and the mobile communication device 100 accesses the cellular mobile network 102 wirelessly via a radio access network, which may be configured according to a radio access technology known to a person skilled in the art. For example, the radio access network may be configured as GERAN (GSM EDGE Radio Access Network) or UTRAN (UMTS Terrestrial Radio Access Network).

The cellular mobile network 102 comprises a circuit switched domain, which provides a message service, such as, for example, a short message service (SMS). Short messages sent by the mobile communication device 100 can be forwarded from the cellular mobile network 102 to the network server 103.

Likewise, the network server 103 may pass short messages to the cellular mobile network 102, which forwards, the short messages to the mobile communication device 100.

Moreover, the cellular mobile network 102 preferably comprises a packet switched domain, which interfaces with the data network 101 and which allows for exchanging data messages between the mobile communication device 100 and the network server 103. These data messages may be e-mail messages, MMS messages (MMS: Multimedia Messaging Service) or data messages having another appropriate format.

In an alternative embodiment, the mobile communication device 100 may access the data network 101 via another communication channel, which may be a WLAN connection between the mobile communication device 100 and the data network 101. The data messages transmitted via the WLAN connection can have the same format as the messages transmitted via the packet switched domain of the cellular mobile network 102.

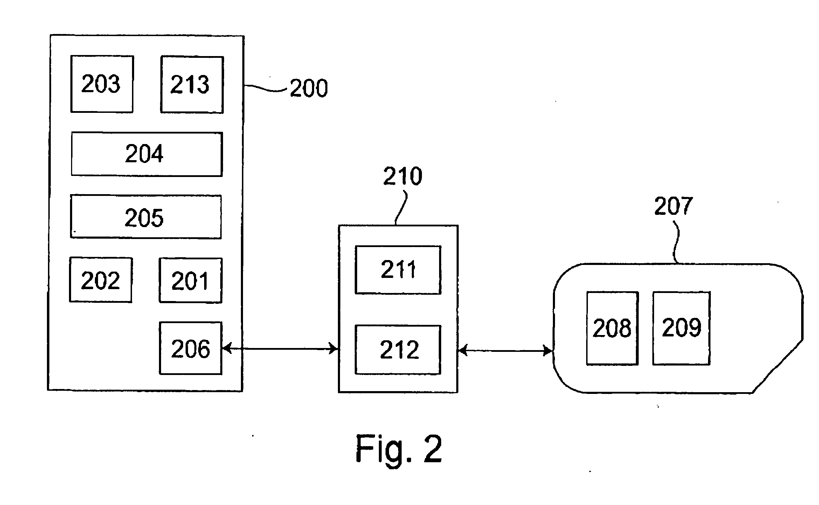

A block diagram of the mobile communication device 100 in one embodiment is schematically depicted in figure 2. The mobile communication device 100 comprises a mobile terminal 200 including a main processor 201 for controlling the operation of the mobile terminal 200. A memory unit 202 is coupled to the main processor 201 for storing data and applications that can be run on the main processor 201.

The mobile terminal 200 comprises one or more communication interfaces for establishing data connections. Particularly, the mobile terminal 200 provides a radio interface 203 for connecting the mobile terminal 200 wirelessly to the cellular mobile network 102. Moreover, the mobile terminal may comprise a WLAN interface 213 for connecting the mobile terminal 200 to the data network 101.

Furthermore, the mobile terminal 200 comprises a display unit 204 and an input unit 205, which can be operated by the user of the mobile communication device 100. The input unit 205 may be configured as a keypad.

By means of a card reader unit 206, the mobile terminal 200 can be connected to a subscriber identification module 207 to form the mobile communication device 100. The subscriber identification module 207 is a so-called smart card, which can be inserted into a card receptacle of the mobile terminal 200 that holds the card in a position, in which its contact elements are connected to corresponding contact elements of the card reader unit 206 of the mobile terminal 200. The card receptacle and the card reader unit 206 are usually arranged within a battery compartment of the mobile terminal 200, which is accessible by the user of the mobile communication device 100.

The subscriber identification module 207 may be configured as a subscriber identity module (SIM) according to the GSM standard or as a universal subscriber identity module (USIM) according to the UMTS standard. It comprises a microprocessor 208 and a non-volatile memory 209 and stores pre-configured user-related and network-related data, particularly data identifying the mobile user and data for authenticating the user or his mobile communication device 100 to the cellular mobile network 102. Moreover, it may store personal data of the mobile user, such as for example, contact data of communication partners of the mobile user, which are managed by an address book application, messages received in the mobile communication device 100 and notes of the user of the mobile communication device 100.

Within the scope of the invention, the subscriber identification module 207 is not connected directly to the mobile terminal 200 or its card reader unit 206, but via an adapter module 210. The adapter module 210 comprises a microprocessor 211 and a memory unit 212 for storing data and applications that can be run on the microprocessor 211. The adapter module 210 is connected between the mobile terminal 200 and the subscriber identification module 207 and acts as a so-called man in the middle between the mobile terminal 200 and the subscriber identification module 207. Hence, communication signals between the mobile terminal 200 and the subscriber identification module 207 are exchanged via the adapter module 210.

The adapter module 210 is capable of manipulating or modifying the data exchanged between the mobile terminal 200 and the subscriber identification module 207. Moreover, the adapter module 210 is capable of initiating a communication with the mobile terminal 200 to interact proactively with the mobile terminal 200 and with the subscriber identification module 207. For this purpose, the adapter module 210 may implement the SIM application toolkit (SAT) specified in the specification GSM 11.14 of the 3^{rd} generation project partnership (3GPP) if the subscriber identification module 207 is a SIM according the GSM standard or the adapter module 210 may implement the USIM application toolkit (USAT) specified in the specification TS 31.111 of the 3GPP if the subscriber identification module 207 is a USIM. The SAT or USAT allows the subscriber identification module 207 to access functions of the mobile terminal 200 and particularly comprises so-called proactive commands by means of which the subscriber identification module 207 is able to access the functions of the mobile terminal 200 on its own initiative. By implementing the SAT or USAT in the adapter module 210, the adapter module 210 is able to access the functions of the mobile terminal 200 in the same way as the subscriber identification module 207.

For connecting the adapter module 210 between the mobile terminal 200 and the subscriber identification module 207, the adapter module 210 comprises a contacting element, which can be inserted into the card receptacle of the mobile terminal 200 and which includes electric contacts for contacting the contact elements of the card reader unit 206. Further electrical contacts are provided for contacting the electric contacts of the subscriber identification module 207. The electric contacts for connecting the adapter module 210 to the mobile terminal 200 and the electric contacts for connecting the adapter module 210 are connected to the microprocessor 211 of the adapter module 210.

As one of the electric contacts of the card reader unit 206 of the mobile terminal 200 acts as a power supply for the subscriber identification module 207, the adapter module 210 can also be supplied with power via this electric contact. Moreover the adapter module 210 is able to forward data received via an electric contact of the card reader to the corresponding electric contact of the subscriber identification module 207 and vice versa. The forwarded data may be modified by the microprocessor 211 of the adapter module 210 or the adapter module 210 may leave the data unmodified, thereby allowing a normal communication between the mobile terminal 200 and the subscriber identification module 207. Moreover, proactive commands are sent from adapter module 210 to the mobile terminal 200 via the electric contact, which are provided for sending commands from the subscriber module 207 to the mobile terminal 200.

In one exemplary embodiment, the adapter module 210 comprises a thin contacting element, which has essentially the same shape as the subscriber identification module 207 and which can be inserted into the card receptacle of the mobile terminal 200 between the electric contacts of the card reader unit 206 and the subscriber identification module 207. On one surface, the contacting element comprises contact elements for contacting the contact elements of the subscriber identification module 207 and on the opposite surface, contact elements are arranged for contacting the contact elements of the card reader unit 206. The contact elements are connected to the microprocessor 211 of the adapter module 210. The microprocessor 211 and the memory unit 212 of the adapter module 210 may be mounted on a circuit board, which is connected to the contacting element by means of a flexible wire, thereby allowing placing the circuit board into the battery compartment of the mobile terminal 200 together with the battery. As an alternative, the microprocessor 211 and the memory unit 212 may be included in a chip that is mounted on the contacting element. In this embodiment, the subscriber identification module 207 is being provided with a cutting for accepting the chip.

In another embodiment, the adapter module 210 comprises a contacting element that has essentially the same shape and thickness as the subscriber identification module 207 and that can be inserted into the card receptacle of the mobile terminal 200 to contact the contact elements of the card reader unit 206. The contacting element is connected to a circuit board via one ore more flexible wires. The microprocessor 211 and the memory unit 212 are mounted on the circuit board and in addition, the circuit board comprises a card reader unit connected to the microprocessor 211 for receiving the adapter module 210 to the subscriber identification module 207. The circuit board may be thin enough to place it into the battery compartment of the mobile terminal 200.

In the course of use of the mobile communication device 100, the user collects personal data, which are memorized in the mobile communication device 100. The data usually comprise contact data of communication partners including phone numbers and/or addresses of the communication partners. The contact data are stored in the memory 209 of the subscriber identification module 207 or in the memory unit 202 of the mobile terminal 200 and they are managed by means of an address book application provided by the mobile terminal 200 or by the subscriber identification module 207. Moreover, the personal data may comprise messages, such as short messages or e-mails, which have been received in the mobile communication device 100. In addition, the mobile communication device 100 may provide functionality for memorizing notes composed by the user. Messages and notes are likewise memorized in the subscriber identification module 207 or in the mobile terminal 200. A specific contact, message or note is hereinafter referred to as data element of the personal data.

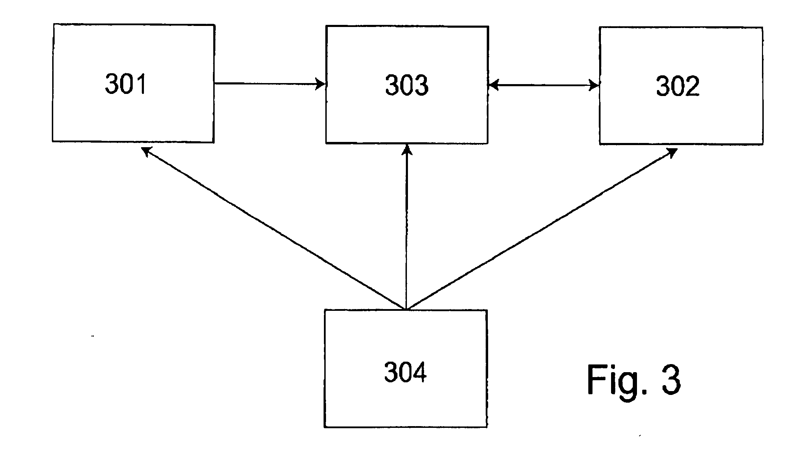

Within the scope of the present invention, the adapter module 210 provides functionality for backing up the personal data of the user of the mobile communication device 100 in the database 104 of the network server 103. The application comprises components, which are depicted in the schematic block diagram in figure 3.

Particularly, the application comprises a backup component 301 for accessing personal data of the user stored in the mobile terminal 200 and in the subscriber identification module 207 and for generating data messages containing the personal data, which are to be sent to the network server 103.

For transmitting the data messages, one predetermined communication channel provided by the mobile communication device 100 for communicating with the network server 103 is used. As described before, the communication channel may be an SMS channel or a connection via the packet switched domain of the cellular mobile network 102 or a WLAN connection. The data messages have a predetermined format in accordance with the predetermined communication channel. Particularly, the data messages may be short messages or the may have a format for transmission via the packet switched domain of the cellular mobile network or the WLAN connection, such as, for example, an e-mail format or a MMS format.

The backup component 301 interfaces with a transmission component of the adapter module 210, which controls the transmission of the generated data messages to the network server 103. For this purpose, the transmission component accesses the mobile terminal 200 and controls the mobile terminal 200 to send the data messages to the network server 103 via the predetermined communication channel using the corresponding communication interface 203, 213 of the mobile terminal 200.

Furthermore, the adapter module 210 comprises a restoring component 302 for restoring the data backed up in the database 104 of the network server 103 in the mobile communication device 100. The restoring component 302 receives data messages containing personal data of the user, which are sent from the server 103 to the mobile communication device 100 and stores the personal data contained in these messages in the mobile terminal 200 and in the subscriber identification module 207. The restoring component 302 interfaces with the transmission component 303 to which data messages of the network server 103 received in the mobile communication device 100 are passed and which forwards the data messages to the restoring component 302.

In one embodiment, the transmission of the data from the network server 103 to the mobile communication device 100 is triggered by a request messages generated in the adapter module 210. The request messages are generated in the restoring component 302 and the transmission component 303 controls the mobile communication device 100 to send the request messages to the network server 103. In another embodiment, the network server 103 sends personal data to be restored upon receipt of a data message from the mobile communication device 100, which includes data to be backed up.

The request messages and the data messages, which are sent from the network server 103, preferably have the same format as the messages, which are generated in the backup component 301 and are transmitted via the same communication channel.

Moreover, the adapter module 210 comprises a security component 304, which authorizes the use of the adapter module 210 in the mobile communication device 100 and which provides a security mechanism for unlocking the backup component 301, the restoring component 302 and the transmission component 303. Preferably, the security mechanism involves the query of a user password, which is verified by security component 304. The user password is stored in a secure area of the memory unit 212 of the adapter module 210 and is known to the user of the mobile communication device 100. For querying the password, the security component 304 generates a so-called random challenge and passes it to the mobile terminal 200. The random challenge comprises randomly generated information, which is temporarily stored in the adapter module 210 after generation. The mobile terminal 200 combines the random information with the user password and encrypts the combination using a predefined encryption algorithm to generate an answer to the random challenge. The user password has to be entered into the mobile terminal 200 by the user of the mobile communication device 100. After having generated the answer to the random challenge, the mobile terminal 200 passes the answer to the adapter module 210. For verifying the user password, the security component 304 retrieves the user password from the secure area of the memory unit 212 and generates an encrypted combination of the retrieved password and the random information using the same predefined encryption algorithm that was used in the mobile terminal 200 for generating the answer to the random challenge. Then, the security component 304 compares this encrypted combination with the encrypted combination included in the answer received from the mobile terminal 200. If both encrypted combinations match, the correct user password has been entered into the mobile terminal 200 and the security component 304 the backup component 301, the restoring component 302 and the transmission component 303. If the encrypted combinations do not match, an invalid password has been entered and the security component 304 does not unlock the backup functionality of the adapter module 210.

Preferably, the components of the backup application of the adapter module are configured as software application stored in the memory unit 212 and run on the microprocessor 211 of the adapter module. As described before, the components use SAT or USAT commands for accessing the mobile terminal 200 proactively.

In the network server 103 the adapter module 210 is registered in an account assigned to the user of the mobile communication device 100. Under this account the network server 103 securely stores access data, which are used for identifying the adapter module 210 and for securing the communication between the adapter module 210 and the network server 103. Particularly, these data include an identification code, which is uniquely assigned to the adapter module 210 and which is also stored in the memory unit 212 of the adapter module 210. A secure communication between the adapter module 210 and the network server 103 is achieved by encrypting the data send from the adapter module 210 to the network server 103 and vice versa. For encrypting the data, preferably a symmetric encryption is used. This means, that the data is encrypted and decrypted using the same secret key. The key is shared between the network server 103 and the adapter module 210 and securely stored in the network server 103 and in the memory unit 212 of the adapter module 210. A symmetric encryption also allows for verifying the authenticity of the sender of the data. As an alternative, a public key infrastructure (PKI) may be used for encrypting the data exchanged between the network server 103 and the adapter module 210.

Usually the personal data of the mobile user are modified frequently, so that regular backups are necessary in order to have the up-to-date personal data stored in the database 104. Moreover, when restoring the data in the mobile communication device 100, part of the data may already be available in the communication device 100. Therefore, preferably a mechanism is provided which synchronizes the mobile communication device 100 and the database 104 in order to prevent redundant storage of personal data in the mobile communication device 100 and/or in the database 104.

In one embodiment of the synchronization mechanism, the processes of transmitting personal data to be backed up the network server 103 the process of retrieving personal data to be restored in the mobile communication device 100. Hence, in this embodiment, the transmission of personal data from the network server 103 to the mobile communication device 100 is triggered by transmitting a data message containing data to be backed up to the network server 103. In doing so, the data message may contain all personal data stored in the mobile communication device 100. Upon receipt of the data message, the network server 103 can compare the received data with the data already stored in the database 104 and determine the data elements of the personal data which are stored only in the database 104 or only in the mobile communication device 100. Then, the network server 103 stores those data elements in the database 104, which are only available in the mobile communication device 100. Those data elements, which are only available in the database 104, are sent to the mobile communication device 100 in order for them to be restored therein.

In an alternative embodiment, the backup component 301 of the adapter module 210 adds a unique identification number to each data element of the personal data which has been transmitted to the network server 103. The identification numbers are stored together with the data elements in the memory unit 202 of the of the mobile terminal 200 and in the memory 209 of the subscriber identification module 207, or the backup component 301 may copy all personal data to the memory unit 212 of the adapter module 210 to store the data together with the identification numbers. Moreover, the data to be backed up is sent to the network server 193 together with the identification numbers, and the network server 103 stores the data elements of the personal together with their identification numbers.

When preparing personal data to be send to the network server 103 for backup, the backup component 301 collects only those data elements, which are not provided with an identification number. Thus, only those data elements are transmitted to the network server 103, which have not been backed up yet. In this embodiment, the network server 103 does not need to compare the received data with the data stored in the database 104 and stores all data elements received in the database 104.

When retrieving personal from the network server 103 the identification numbers available in the mobile communication device 100 are transmitted to the network server 103. For this purpose, the backup component 301 may include the available identification numbers in the data message sent to the network server 103, if the restoring procedure is triggered by sending personal data to be backed up to the network server 103. Otherwise, the restoring component 302 may include the identification code in the request message, which triggers the transmission of backed up personal data from the network server 103 to the mobile communication device 100. The network server 103 compares the received identification numbers with the identification numbers of the data elements stored in the database 104 to determine those data elements of the personal data of the user, which are not available in the mobile communication device 100, and only these data elements are sent to the mobile communication device 100.

Hereinafter, the processes of backing up the personal data of the user in the database 104 of the network server 103 and of restoring the data in the mobile communication device 100 will be described.

The backup process may be initiated by a command given by the user of the mobile communication device 100 by means of the input unit 205 of the mobile terminal 200, which passes the command to the adapter module 210. As an alternative, the adapter module 210 automatically initiates the backup procedure in accordance with a predefined condition. For example, the backup procedure may be started in regular time intervals or it may be started each time the mobile communication device 100 is turned on or off. Moreover, in one embodiment, the adapter module 210 monitors modifications of the personal data and initiates the backup procedure each time a modification of the personal is made.

Upon initiation of the backup process, the backup component 301 of the adapter module 210 accesses the personal data of the user stored in mobile terminal 200 and in the subscriber identification module 207. Optionally, the backup component 301 also determines the data elements of the personal to be backed up as described before. Moreover, in one embodiment described before, the identification numbers of the data elements available in the mobile communication device are added. After having retrieved the data to be backed up, the backup component 301 encrypts the data using the encryption key, which is shared with the network server 103 and which is stored in the adapter module 210. The encryption is done using a predetermined encryption algorithm implemented in the backup component 301. For example, the encryption algorithm may be an AES algorithm (AES: Advanced Encryption System), if a symmetric encryption is provided.

In the next step, one or more data messages are generated from the encrypted data in the predetermined format. If short messages are used for transmitting the data to the network server 103, a plurality of short messages may have to be generated by the backup component 301, since the size of short messages are restricted. If data messages are used, which are transmitted via the packet switched domain of the cellular mobile network 102 or the WLAN connection, the data may be included in one message.

The generated messages are provided with headers including information identifying the adapter module 210 and the network server 103. Particularly, the message headers include the identification code assigned to the adapter module 210 and an identifier of the network server 103, which serves as an address of the network server 103. This may be a Uniform Resource Locator (URI) or an IP address of the network server or, in case the messages are short messages, an MSISDN assigned to the network server. In addition, the header also comprises an identifier of the mobile communication device 100, which allows the network server 103 to answer the message. This may be an IP address of the mobile communication device or, in case messages are short messages, the MSISDN assigned to the mobile communication device 100. Moreover, the header may include an integrity reference for verifying the integrity of the data included in the message, such as, for example, a hash value of the data. In one embodiment, a part of the header, such as, for example, the integrity reference, may be encrypted in the same way as the data included in the message.

After having generated the data messages, the backup component 301 passes the data messages to the transmission component 303. The transmission component 303 forwards the messages to the mobile terminal 200 and instructs the mobile terminal 200 to send the data message to the network server 103 via the predetermined communication channel.

Upon receipt of the data messages, the network server 103 checks the message header and determines the key for decrypting the messages using the identification code of the adapter module 210 included in the headers. Then, the network server 103 verifies the authenticity and the integrity of the data messages by encrypting the messages and verifying the integrity references. If the authenticity and the integrity have been successfully verified, the network server 103 reads and encrypts the personal data of the user of the mobile communication device 100, which is contained in the data messages. In a next step, the network server 103 stores the personal data under the account assigned to the adapter module 210. As described before, the network server 103 optionally also determines, which received data elements of the personal data of the user are to be stored in the database 104, and stores only these.

As described before, the process of restoring the personal data of the user in the mobile communication device 100 may be combined with the backup process. This means that network server 103 initiates the transmission of the personal data to the mobile communication device 100 upon receipt of the data message containing the personal data to be backed up.

As alternative, the network server 103 may initiate the transmission on receipt of a request message generated by the restoring component 302. For example, the request message is generated upon a command given by the user of the mobile communication device 100. The request message contains a request information and a header, which corresponds to the header of the data message generated in the backup component 301, and is partly encrypted using the key shared with the network server 103. Only the integrity reference may be omitted, if the request message only contains the request information. However, as described before, in one embodiment, the restoring component 302 determines identification codes of the data elements of the personal data, which are stored in the mobile communication device 100. In this embodiment, the restoring component 302 includes these identification codes in the message in an encrypted form and it includes the integrity reference in the header of the message. The message is transmitted to the network server 103 in the same way as the data message generated in the backup component 301 via the predetermined communication channel.

Upon receipt of the request message, the network server 103 checks the message header and determines the key for decrypting the message using the identification code of the adapter module 210 included in the header. Then, the network server 103 verifies the authenticity of the request message by decrypting the encrypted parts of the message. If the message contains the aforementioned identification codes, the network server 103 also checks the integrity of the message by verifying the integrity reference. If the authenticity and the integrity have been successfully verified, the network server 103 initiates the transmission of the personal data to be restored.

After the restoring procedure has been initiated in the network server 103, the network server 103 retrieves the data to be restored from the database 104. As described before, this may include determining the data elements of the personal data, which are not available in the mobile communication device 100. In a next step, the data is encrypted using a key, which is shared between the network server 103 and the adapter module 210.

Then, the network server 103 generates one or more messages in the predetermined format. Again, if short messages are used, a plurality of short messages may have to be generated by the network server 103. If data messages are used, which are transmitted via the packet switched domain of the cellular mobile network 102 or the WLAN connection, the data may be included in one message. The generated messages include headers comprising information identifying at least the mobile communication device 100, which serve for addressing the messages. If the generated messages are short messages, this information is the MSISDN assigned to mobile communication device 100, which was included in the message that triggered the restoring procedure. If the data is sent via a packet switched data connection or the WLAN connection, the header comprises the IP address of the mobile communication device 100, which was included in the message that triggered the restoring procedure. In addition, the header comprises the address of a port of the mobile terminal 200 the adapter module 210 is registered on for communicating with the mobile terminal 200. The presence of this port address will cause the mobile terminal 200 to pass the message to the adapter module 210. Moreover, the header may include an integrity reference for verifying the integrity of the data included in the message, such as, for example, a hash value of the data included in the message. In one embodiment, a part of the header, such as, for example, the integrity reference, may be encrypted in the same way as the data included in the message.

After having generated the message, the network server 103 sends the message to the mobile communication device 100 specified in the message header via the predetermined communication channel. The mobile communication device 100 receives the message in the mobile terminal 200, which passes the message to the adapter module 210. In the adapter module 210, the restoring component 302 decrypts the message and verifies its integrity by checking the integrity reference. When the message has been successfully decrypted and the integrity of the message has been successfully verified, the restoring component 302 passes the personal data of the user included in the message to the mobile terminal 200, so that the data is restored in the mobile terminal 200 and in the subscriber identification module 207.

Of course, the restoring procedure can be carried out using the mobile communication device 100 from which personal data of the user has been backed up in the database 104. Likewise the restoring procedure can be carried out using a second mobile communication device 100, which is different from the mobile communication device 100 from which the data originates. For restoring the data backed in a second mobile communication device 100, this device may be equipped with a second adapter module 210, which is configured in the same way as the first adapter module 210 of the first mobile communication device 100. The second adapter module 210 uses encryption keys for encrypting data sent to the network server 103 and decryption keys for decrypting data received from the network server 103 which correspond to decryption and encryption keys, which are available in the user account of the mobile user in the network server 103. Preferably, these keys are stored in the user account in addition to those used in connection with the first adapter module 210. Moreover, the identification code of the second adapter module 210 is stored in the user account in addition to the identification code of the first adapter module. Thus, in the user account of one mobile user information for using several adapter modules 210 may be available.

## Claims

1. An adapter module (210) for use in a mobile communication device (100) being connected to a network server (103) via a communication network (101, 102) comprising a mobile terminal (200) and a subscriber identification module (207), wherein the adapter module (210) is connected between the mobile terminal (200) and the subscriber identification module (207), wherein the adapter module (210) comprises a backup component (301) providing a backup functionality independent of the functions of the mobile terminal (200) and the subscriber identification module (207), which is configured to access first data stored in the mobile communication device (100) and to form a first data message from the first data, and wherein the adapter module (210) comprises a transmission component (303), which is configured to instruct the mobile communication device (100) to send the first data message to the network server (103) via the communication network (101, 102).

2. The adapter module (210) according to claim 1, wherein backup component (301) is configured to use SIM application toolkit commands or USIM application toolkit commands for accessing the first data.

3. The adapter module (210) according to claim 1 or 2, wherein the transmission component (303) is configured to use SIM application toolkit commands or USIM application toolkit commands to instruct the mobile communication device (100) to send the first data message to the network server (103).

4. The adapter module (210) according to one of the preceding claims, comprising a restoring component (302) which is configured to receive a second data message sent from the network server (103) to the mobile communication device (100) and which is configured to store second data included in the second data message in the mobile communication device (100).

5. The adapter module (210) according to claim 4, wherein the transmission component (303) is configured to use SIM application toolkit commands or USIM application toolkit commands to store the second data in the mobile communication device (100).

6. The adapter module (210) according to one of the preceding claims, comprising a memory unit (212) storing an address identifier for addressing the first data message to the network server (103).

7. The adapter module (210) according to one of the preceding claims, wherein the backup component (301) is configured to encrypt at least a part of the first data message in such a way that it can be decrypted in the network server (103).

8. The adapter module (210) according to one of the preceding claims, wherein the backup component (301) is configured to add first authentication information to the first data message, which allow for an authentication of the first data message in the network server (103).

9. The adapter module (210) according to one of the preceding claims, wherein at least part of the second data message is encrypted and wherein the restoring component (302) is configured to decrypt the second data message.

10. The adapter module (210) according to one of the preceding claims, wherein the restoring component (302) is configured to authenticate the second data message by verifying a second authentication information included in the second data message by the network server (103).

11. The adapter module (210) according to one of the preceding claims, comprising a security component (304) which is configured to request a user password from the mobile communication device (100) and to verify the user password.

12. The adapter module (210) according to claim 11, wherein the security component (304) is configured to lock the backup component (301) and/or the restoring component (302) unless the user password has been verified successfully.

13. The adapter module (210) according to one of the preceding claims, wherein the first and second data are personal data of a user of the mobile communication device (100), particularly address book data and/or messages received in the mobile communication device (100).

14. The adapter module (210) according to one of the preceding claims, wherein the communication network (101, 102) is cellular mobile network.

15. A mobile communication device (100) comprising a mobile terminal (200), a subscriber identification module (207) and an adapter module (210) for backing up first data stored therein in a network server (103) connected to mobile communication device (100) via a communication network (101, 102), **characterized in that**
the adapter module (210) is connected between the mobile terminal (200) and the subscriber identification module (207), wherein the adapter module (210) comprises a backup component (301) providing a backup functionality independent of the functions of the mobile terminal (200) and the subscriber identification module (207), which is configured to access the first data stored in the mobile communication device (100) and to form a first data message from the first data, and wherein the adapter module (210) comprises a transmission component (303), which is configured to instruct the mobile communication device (100) to send the first data message to the network server (103) via the communication network (101, 102).

16. A method for backing up first data stored in a mobile communication device (100)) comprising a mobile terminal (200) and a subscriber identification module (207) in a remote server connected to the mobile communication device (100) via a communication network (101, 102), wherein an adapter module (210) is connected between the mobile terminal (200) and the subscriber identification module (207) to provide a backup functionality independent of the functions of the mobile terminal (200) and the subscriber identification module (207), wherein the adapter module (210) accesses the first data and forms a first data message from the first data and wherein the adapter module (210) instructs the mobile communication device (100) to send the first data message to the network server (103) via the communication network (101, 102).

## Patentansprüche

1. Adaptermodul (210) zur Verwendung in einer über ein Kommunikationsnetz (101, 102) mit einem Netzserver (103) verbundenen Mobilkommunikationsvorrichtung (100), die ein mobiles Endgerät (200) und ein Teilnehmer-Identifizierungs-Modul (207) umfasst, wobei das Adaptermodul (210) zwischen das mobile Endgerät (200) und das Teilnehmer-Identifizierungs-Modul (207) geschaltet ist, wobei das Adaptermodul (210) eine Sicherungskomponente (301), die unabhängig von den Funktionen des mobilen Endgeräts (200) und des Teilnehmer-Identifizierungs-Moduls (207) eine Sicherungsfunktionalität bereitstellt, umfasst, die dafür konfiguriert ist, auf in der Mobilkommunikationsvorrichtung (100) gespeicherte erste Daten zuzugreifen und aus den ersten Daten eine erste Datennachricht zu bilden, und wobei das Adaptermodul (210) eine Übertragungskomponente (303) umfasst, die dafür konfiguriert ist, die Mobilkommunikationsvorrichtung (100) anzuweisen, die erste Datennachricht über das Kommunikationsnetz (101, 102) an den Netzserver (103) zu senden.

2. Adaptermodul (210) nach Anspruch 1, wobei eine Sicherungskomponente (301) dafür konfiguriert ist, zum Zugreifen auf die ersten Daten SIM-Anwendungs-Toolkit-Befehle oder USIM-Anwendungs-Toolkit-Befehle zu verwenden.

3. Adaptermodul (210) nach Anspruch 1 oder 2, wobei die Übertragungskomponente (303) dafür konfiguriert ist, SIM-Anwendungs-Toolkit-Befehle oder USIM-Anwendungs-Toolkit-Befehle zu verwenden, um die Mobilkommunikationsvorrichtung (100) anzuweisen, die erste Datennachricht an den Netzserver (103) zu senden.

4. Adaptermodul (210) nach einem der vorhergehenden Ansprüche, das eine Wiederherstellungskomponente (302) umfasst, die dafür konfiguriert ist, eine zweite Datennachricht zu empfangen, die von dem Netzserver (103) an die Mobilkommunikationsvorrichtung (100) gesendet wird, und die dafür konfiguriert ist, in der zweiten Datennachricht enthaltene zweite Daten in der Mobilkommunikationsvorrichtung (100) zu speichern.

5. Adaptermodul (210) nach Anspruch 4, wobei die Übertragungskomponente (303) dafür konfiguriert ist, SIM-Anwendungs-Toolkit-Befehle oder USIM-Anwendungs-Toolkit-Befehle zu verwenden, um die zweiten Daten in der Mobilkommunikationsvorrichtung (100) zu speichern.

6. Adaptermodul (210) nach einem der vorhergehenden Ansprüche, das eine Speichereinheit (212) umfasst, die eine Adressenkennung zum Adressieren der ersten Datennachricht an den Netzserver (103) speichert.

7. Adaptermodul (210) nach einem der vorhergehenden Ansprüche, wobei die Sicherungskomponente (301) dafür konfiguriert ist, wenigstens einen Teil der ersten Datennachricht in einer Weise zu verschlüsseln, dass sie in dem Netzserver (103) entschlüsselt werden kann.

8. Adaptermodul (210) nach einem der vorhergehenden Ansprüche, wobei die Sicherungskomponente (301) dafür konfiguriert ist, zu der ersten Datennachricht erste Authentifizierungsinformationen hinzuzufügen, die eine Authentifizierung der ersten Datennachricht in dem Netzserver (103) ermöglichen.

9. Adaptermodul (210) nach einem der vorhergehenden Ansprüche, wobei wenigstens ein Teil der zweiten Datennachricht verschlüsselt ist und wobei die Wiederherstellungskomponente (302) dafür konfiguriert ist, die zweite Datennachricht zu entschlüsseln.

10. Adaptermodul (210) nach einem der vorhergehenden Ansprüche, wobei die Wiederherstellungskomponente (302) dafür konfiguriert ist, die zweite Datennachricht durch Verifizieren in der zweiten Datennachricht enthaltener zweiter Authentifizierungsinformationen des Netzservers (103) zu authentifizieren.

11. Adaptermodul (210) nach einem der vorhergehenden Ansprüche, das eine Sicherheitskomponente (304) umfasst, die dafür konfiguriert ist, von der Mobilkommunikationsvorrichtung (100) ein Nutzerkennwort anzufordern und das Nutzerkennwort zu verifizieren.

12. Adaptermodul (210) nach Anspruch 11, wobei die Sicherheitskomponente (304) dafür konfiguriert ist, die Sicherungskomponente (301) und/oder die Wiederherstellungskomponente (302) zu verriegeln, wenn das Nutzerkennwort nicht erfolgreich verifiziert worden ist.

13. Adaptermodul (210) nach einem der vorhergehenden Ansprüche, wobei die ersten und die zweiten Daten personenbezogene Daten eines Nutzers der Mobilkommunikationsvorrichtung (100), insbesondere Adressbuchdaten und/oder in der Mobilkommunikationsvorrichtung (100) empfangene Nachrichten, sind.

14. Adaptermodul (210) nach einem der vorhergehenden Ansprüche, wobei das Kommunikationsnetz (101, 102) ein zellulares Mobilkommunikationsnetz ist.

15. Mobilkommunikationsvorrichtung (100), die ein mobiles Endgerät (200), ein Teilnehmer-Identifizierungs-Modul (207) und ein Adaptermodul (210) zum Sichern darin gespeicherter erster Daten in einem über ein Kommunikationsnetz (101, 102) mit der Mobilkommunikationsvorrichtung (100) verbundenen Netzserver (103) umfasst, **dadurch gekennzeichnet, dass** das Adaptermodul (210) zwischen das mobile Endgerät (200) und das Teilnehmer-Identifizierungs-Modul (207) geschaltet ist, wobei das Adaptermodul (210) eine Sicherungskomponente (301), die unabhängig von den Funktionen des mobilen Endgeräts (200) und des Teilnehmer-Identifizierungs-Moduls (207) eine Sicherungsfunktionalität bereitstellt, umfasst, die dafür konfiguriert ist, auf die ersten Daten, die in der Mobilkommunikationsvorrichtung (100) gespeichert sind, zuzugreifen und aus den ersten Daten eine erste Datennachricht zu bilden, und wobei das Adaptermodul (210) eine Übertragungskomponente (303) umfasst, die dafür konfiguriert ist, die Mobilkommunikationsvorrichtung (100) anzuweisen, die erste Datennachricht über das Kommunikationsnetz (101, 102) an den Netzserver (103) zu senden.

16. Verfahren zum Sichern erster Daten, die in einer Mobilkommunikationsvorrichtung (100), die ein mobiles Endgerät (200), ein Teilnehmer-Identifizierungs-Modul (207) umfasst, gespeichert sind, in einem Server, der über ein Kommunikationsnetz (101, 102) mit der Mobilkommunikationsvorrichtung (100) verbunden ist, wobei zwischen das mobile Endgerät (200) und das Teilnehmer-Identifizierungs-Modul (207) ein Adaptermodul (210) geschaltet ist, um unabhängig von den Funktionen des mobilen Endgeräts (200) und des Teilnehmer-Identifizierungs-Moduls (207) eine Sicherungsfunktionalität bereitzustellen, wobei das Adaptermodul (210) auf die ersten Daten zugreift und aus den ersten Daten eine erste Datennachricht bildet und wobei das Adaptermodul (210) die Mobilkommunikationsvorrichtung (100) anweist, die erste Datennachricht über das Kommunikationsnetz (101, 102) an den Netzserver (103) zu senden.

## Revendications

1. Module adaptateur (210) destiné à être utilisé dans un dispositif de communication mobile (100) relié à un serveur réseau (103) par un réseau de communication (101, 102) comprenant un terminal mobile (200) et un module d'identification de souscripteur (207), sachant que le module adaptateur (210) est relié entre le terminal mobile (200) et le module d'identification de souscripteur (207), sachant que le module adaptateur (210) comprend un composant de sauvegarde (301) fournissant une fonctionnalité de sauvegarde indépendante des fonctions du terminal mobile (200) et du module d'identification de souscripteur (207), qui est configuré pour accéder à des premières données stockées dans le dispositif de communication mobile (100) et pour former un message de premières données à partir des premières données, et dans lequel le module adaptateur (210) comprend un composant de transmission (303) qui est configuré pour donner l'instruction au dispositif de communication mobile (100) d'envoyer le message de premières données au premier serveur réseau (103) par le réseau de communication (101, 102).

2. Module adaptateur (210) selon la revendication 1, dans lequel le composant de sauvegarde (301) est configuré pour utiliser des commandes de boîte à outils d'application SIM ou des commandes de boîte à outils d'application USIM pour accéder aux premières données.

3. Module adaptateur (210) selon la revendication 1 ou 2, dans lequel le composant de transmission (303) est configuré pour utiliser des commandes de boîte à outils d'application SIM ou des commandes de boîte à outils d'application USIM pour donner l'instruction au dispositif de communication mobile (100) d'envoyer le message de premières données au serveur réseau (103).

4. Module adaptateur (210) selon l'une des revendications précédentes comprenant un composant de récupération (302) qui est configuré pour recevoir un message de secondes données envoyé par le serveur réseau (103) au dispositif de communication mobile (100) et qui est configuré pour stocker des secondes données incluses dans le message de secondes données dans le dispositif de communication mobile (100).

5. Module adaptateur (210) selon la revendication 4, dans lequel le composant de transmission (303) est configuré pour utiliser des commandes de boîte à outils d'application SIM ou des commandes de boîte à outils d'application USIM pour stocker les secondes données dans le dispositif de communication mobile (100).

6. Module adaptateur (210) selon l'une des revendications précédentes comprenant une unité de mémoire (212) stockant un identifiant d'adresse pour adresser le message de premières données au serveur réseau (103).

7. Module adaptateur (210) selon l'une des revendications précédentes, dans lequel le composant de sauvegarde (301) est configuré pour encoder au moins une partie du message de premières données de façon à ce qu'il puisse être décodé dans le serveur réseau (103).

8. Module adaptateur (210) selon l'une des revendications précédentes, dans lequel le composant de sauvegarde (301) est configuré pour ajouter une première information d'authentification au message de premières données, ce qui permet une authentification du message de premières données dans le serveur réseau (103).

9. Module adaptateur (210) selon l'une des revendications précédentes, dans lequel au moins une partie du message de secondes données est encodé et dans lequel le composant de récupération (302) est configuré pour décoder le message de secondes données.

10. Module adaptateur (210) selon l'une des revendications précédentes, dans lequel le composant de récupération (302) est configuré pour authentifier le message de secondes données en vérifiant une seconde information d'authentification incluse dans le message de secondes données du serveur réseau (103).

11. Module adaptateur (210) selon l'une des revendications précédentes, comprenant un composant de sécurité (304) qui est configuré pour demander un mot de passe utilisateur au dispositif de communication mobile (100) et pour vérifier le mot de passe utilisateur.

12. Module adaptateur (210) selon la revendication 11, dans lequel le composant de sécurité (304) est configuré pour verrouiller le composant de sauvegarde (301) et/ou le composant de récupération (302) à moins que le mot de passe utilisateur n'ait été vérifié avec succès.

13. Module adaptateur (210) selon l'une des revendications précédentes, dans lequel les premier et second messages de données sont des données personnelles d'un utilisateur du dispositif de communication mobile (100), particulièrement des données de carnet d'adresse et/ou des messages reçus dans le dispositif de communication mobile (100).

14. Module adaptateur (210) selon l'une des revendications précédentes, dans lequel le réseau de communication (101, 102) est un réseau de téléphonie mobile.

15. Dispositif de communication mobile (100) comprenant un terminal mobile (200), un module d'identification de souscripteur (207) et un module adaptateur (210) pour sauvegarder des premières données stockées dans un serveur réseau (103) relié à un dispositif de communication mobile (100) par un réseau de communication (101, 102), **caractérisé en ce que** le module adaptateur (210) est relié entre le terminal mobile (200) et le module d'identification de souscripteur (207), sachant que le module adaptateur (210) comprend un composant de sauvegarde (301) fournissant une fonctionnalité de sauvegarde indépendante des fonctions du terminal mobile (200) et du module d'identification de souscripteur (207), qui est configuré pour accéder aux premières données stockées dans le dispositif de communication mobile (100) et pour former un message de premières données à partir des premières données, et dans lequel le module adaptateur (210) comprend un composant de transmission (303) qui est configuré pour donner l'instruction au dispositif de communication mobile (100) d'envoyer le message de premières données au serveur réseau (103) par le réseau de communication (101, 102).

16. Procédé de récupération de premières données stockées dans un dispositif de communication mobile (100) comprenant un terminal mobile (200) et un module d'identification de souscripteur (207) dans un serveur à distance relié au dispositif de communication mobile (100) par un réseau de communication (101, 102), dans lequel un module adaptateur (210) est relié entre le terminal mobile (200) et module d'identification de souscripteur (207) pour fournir une fonctionnalité de récupération indépendante des fonctions du terminal mobile (200) et du module d'identification de souscripteur (207), dans lequel le module adaptateur (210) accède aux premières données et forme un message de premières données à partir des premières données, et dans lequel le module adaptateur (210) donne l'instruction au dispositif de communication mobile (100) d'envoyer le message de premières données au serveur réseau (103) par le réseau de communication (101, 102).
